# EUROPÄISCHE PATENTANMELDUNG

(11) **EP 0 867 644 A2**
(43) Veröffentlichungstag der Anmeldung: **30.09.1998**
(21) Anmeldenummer: 98103991.0
(22) Anmeldetag: 06.03.1998
(51) Int. Cl.: F16J 15/12, F16J 15/08

(54) **Metallische Zwischenlage für hochbeanspruchbare Flachdichtungen und Verfahren zur Herstellung einer Flachdichtung mit einer solchen Zwischenlage**

(30) Priorität: 26.03.1997 DE 19712675
(71) Anmelder: IDT INDUSTRIE- und DICHTUNGSTECHNIK GmbH, D-45307 Essen (DE)
(72) Erfinder: Notter, Wolfgang, 45257 Essen (DE)
(74) Vertreter: Rau, Manfred, Dr. Dipl.-Ing.

(57) **Zusammenfassung**

Für die ökonomische Herstellung hochbeanspruchbarer, verbesserte Dichteigenschaften und erhöhte Standfestigkeit aufweisende Flachdichtungen aus Dichtwerkstofflagen mit metallischer Zwischenlage (32), bildet man diese Zwischenlage (32) aus einem mit einem Längsprofil (35) versehenem Blechstreifen, wobei mindestens einer seiner Ränder (33, 34) mit Einschnitten (37, 38) versehen wird, wickelt daraus in Schraubenlinienform als Liefereinheit einen Coil mit einem definierten Durchmesser, wobei Steifigkeit, Blechdicke, Einschnitttiefe und -abstand usw. so auf den Coil-Durchmesser abgestimmt sind, daß man einen benötigten Abschnitt auf den gewünschten Krümmungsradius biegen kann, verbindet die Enden miteinander und legt vor dem Spannen der Dichtstelle diese Zwischenlage (32) vor Ort zwischen die zwei Dichtwerkstofflagen.

## Beschreibung

Die Erfindung betrifft eine metallische Zwischenlage für hochbeanspruchbare Flachdichtungen, insbesondere in der Apparate- und Rohrleitungstechnik, gemäß Oberbegriff des Anspruches 1.

Aus DE 41 05 367 A1 ist ein Dichtungsband aus einem längslaufenden Blechstreifen und einer beidseitigen Abdeckungsschicht aus einem Weichdichtungswerkstoff, die mit dem Blechstreifen verbunden ist, bekannt, wobei dieses Band an beiden Längsrändern eine in Querrichtung verlaufende Wellprofilierung aufweist. Vorzugsweise ist zwischen den beiden Wellprofilierungen der Ränder ein wellenfreier Bereich mit durchlaufender Längsprofilierung vorgesehen. Dank der Wellprofilierung ist das in Form eines offensichtlich spiralförmig gewickelten Coils anlieferbare Dichtband in der Dichtungsebene bogenförmig verformbar. Sowohl beim Anbringen der Wellprofilierung als auch beim bogenförmigen Verformen besteht die Gefahr, daß sich die Abdeckungsschichten zumindest stellenweise ablösen oder beschädigt werden, und beim Spannen der Dichtungsstelle bilden sich in ungünstiger Weise in Längsrichtung des Dichtbandes Zonen unterschiedlichen Spanndruckes aus, wodurch Taschen für Ablagerungen gebildet werden, Leckage begünstigt und die Standzeit der Dichtung verringert wird. Der Vorteil der Anlieferung eines krümmbaren Dichtbandes in Form eines Coils besteht zweifellos darin, daß man insbesondere Dichtungen größeren Durchmessers vor Ort herstellen kann. Man hat wesentlich geringere Lagerhaltung, schnelleren Zugriff und spart gegenüber beim Hersteller komplett vorgefertigten Dichtungen großen Durchmessers erheblich an Verpackungs- und Versandkosten, von Transportproblemen ganz zu schweigen.

Aufgabe der vorliegenden Erfindung ist es, die vorbeschriebenen Vorteile mit einem verbesserten Abdichtungsverhalten und höherer Standfestigkeit und Standzeit der Dichtung zu kombinieren.

Diese Aufgabe wird gemäß Kennzeichen des Anspruches 1 gelöst.

Aus G 90 91 847 U1 ist zwar ein mit Einschnitten versehener, zu einem U-förmigen Klemmprofil gebogener Blechstreifen bekannt, wie er vorzugsweise im Kfz-Bereich als Einlage für Dichtstreifen zum Abdichten von Motorraum-, Kofferraum- und Türöffnungen eingesetzt wird. Dieses Klemmprofil wird bereits beim Extrusionsprozeß des Dichtstreifens in diesen eingebettet. Für hoch beanspruchbare Flachdichtungen, insbesondere Flachringdichtungen im Apparate- und Rohrleitungsbau sind derartige U-förmige, Klemmwirkung ausübende Blechstreifen jedoch nicht einsetzbar.

DE 35 09 928 A1 beschreibt eine elastische Dichtung für Türen von Hausgeräten, wie Kühlschränken. Dabei sind in vorgesehene Hohlräume eines langgestreckten elastischen Profilstreifens Blechschienen im Bereich der späteren Ecken eingeschoben, welche Sollbiegestellen in Form von Schieneneinschnitten aufweisen. Beim Anbringen des bereits auf Länge zugeschnittenen Profilstreifens wird dieser samt den eingelegten Blechschienen zur Bildung der Ecken gekrümmt. Ganz abgesehen davon, daß es sich auch hier um eine völlig andere Art von Dichtungen für ein anderes Anwendungsgebiet handelt, erfolgt ähnlich wie gemäß DE 41 05 367 A1 das Krümmen der Einlagen einschließlich des Dichtsteifens.

Das Zusammenfügen der neuen Flachdichtung aus Dichtwerkstoffschichten und metallischer Einlage unmittelbar vor Ort hat überraschende Vorteile. Da verschiedene Dichtwerkstoffe in Platten- bzw. Folienform in jeder Betriebs- und Instandhaltungsswerkstatt sowieso auf Vorrat gehalten werden müssen, ist es beispielsweise bei einer schadhaften, zu erneuernden Dichtung möglich, den geeigneten Dichtwerkstoff erst unmittelbar vor der Reparatur auszuwählen und zuzuschneiden. Da im vorliegenden Falle nur die Zwischenlage in Form eines schraubenlinienförmig aus einem Blechstreifen ohne Deckschichten gewickelten Coils zum Versand und zur Vorratshaltung kommt, bedeutet dies geringere Kosten und weniger Platzbedarf und geringere Beschädigungsgefahr. Da das Krümmen des Blechstreifens völlig ohne Beanspruchung der Dichtwerkstoffschichten erfolgt, besteht auch keine Gefahr, letztere zu beschädigen.

Die erfindungsgemäße Zwischenlage ist vornehmlich für kreisrunde Flachringdichtungen gedacht; sie ist aber auch für Flachdichtungen mit anderer, in der Dichtungsebene zumindest teilweise Krümmungen aufweisende Grundrißform, beispielsweise Ellipsenform, geeignet. Als Dichtungswerkstoffe sind in Abhängigkeit vom Einsatzweck alle in Platten- bzw. Folienform erhältlichen verwendbar, insbesondere solche aus bzw. mit Graphit. Als Metalle bzw. Metall-Legierungen für den Blechstreifen sind alle solchen geeignet, wie sie auch für Wellringeinlagen seit langem Verwendung finden, insbesondere Edelstahl.

Die Längsprofilierung des Blechstreifens besteht in Anlehnung an Wellringeinlagen vorzugsweise aus ohne Unterbrechung durchlaufenden Kämmen und Tälern.

Vorzugsweise besitzt der Blechstreifen beidseitig Ränder mit Einschnitten. Für gewisse Anwendungsfälle ist auch die nur einseitige Anordnung eines Randes möglich. Die Einschnitte können verschiedene Form aufweisen: Beispielsweise konstante Breite oder Dreiecksform. Die Öffnungsbreite an der Streifenkante sollte so bemessen sein, daß beim Krümmen auf den benötigten Radius kein Gegeneinanderpressen oder gar eine Überlappung der verbleibenden Randabschnitte stattfindet. Vornehmlich sollte darauf geachtet werden, daß die Köpfe der Einschnitte abgerundet sind, damit beim Krümmen kein Einreißen erfolgen und keine übermäßige Kerbwirkung auftreten kann.

Der Wickeldurchmesser des Coils muß also zu der Größe, Form und dem Abstand der Einschnitte voneinander in einer solchen Beziehung stehen, daß für die Anwendung ein gewünschter möglicher Krümmungsbereich ohne Komplikationen erzielbar ist, um beim Krümmen des Blechstreifens darin keine übermäßigen Spannungen aufzubauen. D.h.: Um den Blechstreifen für stark unterschiedliche Krümmungen bzw. Durchmesser von Flachdichtungen hinsichtlich seiner Verformungs- und Festigkeitseigenschaften möglichst optimal und wirtschaftlich ausbilden zu können, sind neben der geeigneten Wahl der Gestaltung der Einschnitte Coils mit entsprechend unterschiedlichem Durchmesser zu wickeln, denn für Krümmungsradien bzw. Dichtungsdurchmesser von z.B. 0,5 bis über 3 m sind zum Erfassen geeigneter Bereiche unter möglichst optimalen Bedingungen mehrere, entsprechend unterschiedliche Coildurchmesser zu wählen. Für Versand und Lagerung lassen sich solche Coils unterschiedlichen Durchmessers in vorteilhafter Weise ineinanderstecken, und zwar vorzugsweise unter Zwischenlage einer trennenden Verpackungsschicht.

Beispielsweise findet ein Blechstreifen aus Edelstahl von 0,5 mm Materialdicke Verwendung. Flanschnutbreiten von 15, 18 bzw. 20 mm sind Blechstreifenbreiten von 13, 16 bzw. 18 mm zugeordnet. Der Blechstreifen weist eine längsverlaufende Wellprofilierung auf, deren Wellenteilung 3 mm beträgt. Dementsprechend ist ein von Einschnitten freier Bereich von 4 mm Breite vorgesehen, so daß beide Oberflächen des Blechstreifens je einen ununterbrochenen Wellenkamm aufweisen. Die Einschnitte besitzen 2 mm Breite und einen Abstand von 30 mm voneinander. Einschnitte dieser Größe erlauben es, daß der mittig verlaufende 4 mm breite Bereich in einem sehr großen Radienbereich in der Streifen- bzw. Dichtungsebene biegbar ist. Ein solcher Blechstreifen ist im Nenngrößenbereich von DN 800 bis DN 3200 für DIN-Apparateflansche mit Nut und Feder einsetzbar, also für einen sehr großen Bereich. Der Coil-Durchmesser muß also mindestens 800 mm betragen, vorzugsweise mehr, etwa um 1000 mm. Ist der einschnittfreie mittlere Bereich breiter oder der Abstand der Einschnitte größer oder deren Tiefe geringer, so ändert sich der Einsatzbereich und der Coil muß einen entsprechend angepaßten Durchmesser aufweisen. Dem Fachmann stehen also mehrere beinflußbare Parameter zum Erzielen optimaler Eigenschaften zur Verfügung, sei es für den Transport, die Lagerhaltung, die Dichtungsherstellung vor Ort, oder die Dichtwirkung selbst.

Die Enden des vom Coil abgeschnittenen Blechstreifen- können stumpf gegeneinander weisen, überlappen, eine Anfasung und / oder einen Überbrückungsstreifen aufweisen und / oder, ggf. zusätzlich, verhakt, verpreßt, verklebt, verlötet, verschweißt oder mittels Durchsetzfügen miteinander verbunden sein. Wichtig ist nur, daß nach dem Spannen der Dichtungsstelle die Verbindungsstelle der Enden dem später innerhalb des Apparates oder der Rohrleitung oder dgl. herrschenden Betriebsdruck standhält und keine Leckage auftritt.

Das Verfahren zum Herstellen der neuartigen Flachdichtung erfolgt gemäß dem Kennzeichen des Anspruches 2.

Dazu läßt sich ein einfacher Blechstreifen längsprofilieren und mit Einschnitten versehen. Dies kann im Durchlauf durch einen oder mehrere Walzenspalte geschehen, bevor der Coil gewickelt wird. Das Wickeln kann beispielsweise durch eine Führung auf einem rotierenden Dorn erfolgen. Die restlichen Schritte zur Herstellung der Flachdichtung vor Ort bedürfen keiner näheren Erläuterung. Wichtig ist nur, daß sowohl die Dichtwerkstoffzuschnitte als auch der einzulegende Blechstreifen, ggf. unter Zuhilfenahme von Hilfmitteln, exakt zentriert auf bzw. zwischen den Dichtflächen, beispielsweise solche von Flanschen, plaziert werden, damit sie beim Spannen der Dichtstelle ihre Position behalten.

In der Zeichnung ist die neuartige metallische Zwischenlage in mehreren Ausführungsbeispielen rein schematisch dargestellt und nachstehend näher erläutert. Es zeigen:
- Fig. 1: die Zwischenlage in Form eines schraubenlinienförmigem Coils in der Stirnansicht und gegenüber den anderen Figuren in kleinerem Maßstab,
- Fig. 2: den Coil gemäß Fig. 1 in der Seitenansicht,
- Fig. 3: eine erste Ausführungsform der Zwischenlage in der Draufsicht,
- Fig. 4: die Zwischenlage gemäß Fig. 3 in der Stirnansicht in ungekrümmtem Zustand,
- Fig. 5: eine zweite Ausführungsform der Zwischenlage in der Draufsicht,
- Fig. 6: die Zwischenlage gemäß Fig. 5 in der Stirnansicht in ungekrümmtem Zustand,
- Fig. 7: eine dritte Ausführungsform der Zwischenlage in der Draufsicht, und
- Fig. 8: die Zwischenlage gemäß Fig. 7 in der Stirnansicht in ungekrümmtem Zustand.

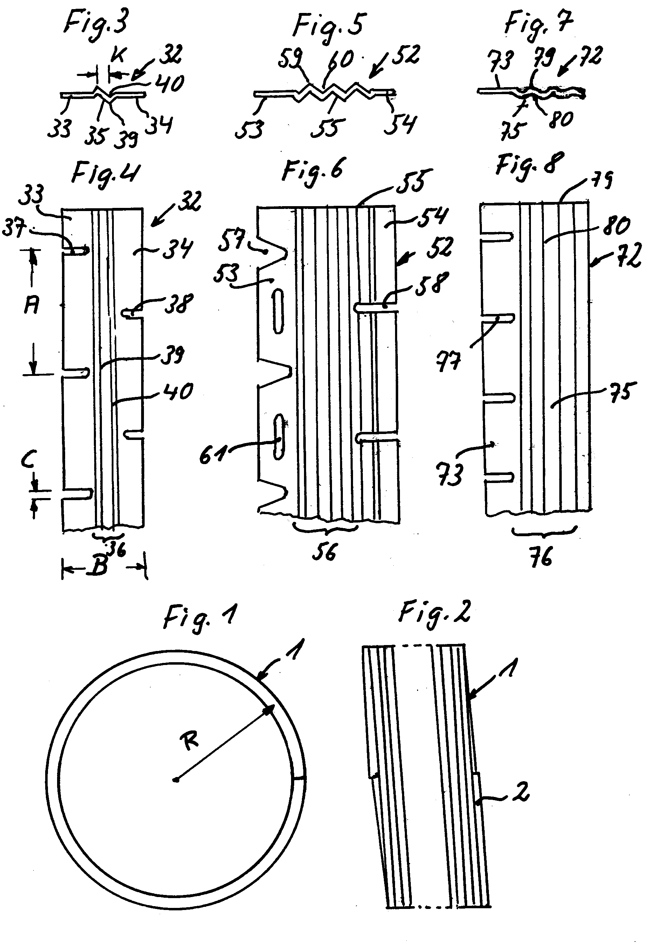

Aus Fig. 1, 2 ist ein schraubenlinienförmig mit dem Radius R von 500 mm gewickelter Coil 1 ersichtlich, welcher aus einem Blechstreifen aus Edelstahl besteht, wobei dieser Blechstreifen eine Zwischenlage 2 für hochbeanspruchbare Flachdichtungen, insbesondere Flachringdichtungen, bildet, wie sie im Rohrleitungs-, Kessel- und Apparatebau verwendet werden. Auf die Darstellung einer speziellen Ausgestaltung der Zwischenlage 2 wurde in diesen Fig. 1, 2 der zeichnerischen Klarheit wegen verzichtet. Beispielsweise Ausführungsformen sind den weiteren, nachfolgend beschriebenen Figuren zu entnehmen.

In Fig. 3, 4 weist die Zwischenlage 32 von der Breite B = 20 mm einen 8 mm breiten "inneren" Rand 33 (bezogen auf die später durchzuführende krümmende Verformung) und einen 6 mm breiten äußeren Rand 34 auf, zwischen denen sich ein mit einer durchlaufenden Längsprofilierung 35 versehener, 6 mm breiter Bereich 36 befindet. Der innere Rand 33 ist mit Einschnitten 37 versehen, welche eine Breite C von 2 mm, eine Tiefe T von 5 mm, und voneinander einen Abstand A von 30 mm aufweisen. Der äußere Rand 34 weist gleichartige Einschnitte 38 gleichen Abstandes B auf; sie sind jedoch gegenüber denen des Randes 33 um den halben Abstand B versetzt. Die Längsprofilierung 35 wird von den Einschnitten 37, 38 nicht berührt und besteht aus Kämmen 39 und Tälern 40. Die Zwischenlage 32 besteht aus einem Blechstreifen aus Edelstahl von der Dicke 0,5 mm. Die Kämme 39 ragen jeweils 0,5 mm über die Blechdicke heraus, so daß sich eine Gesamtdicke der Zwischenlage 32 von 1,5 mm ergibt. Die Kopfe der Einschnitte 37, 38 sind abgerundet, um Kerbwirkung bzw. Einreißen beim Krümmen zu vermeiden. Diese Zwischenlage 32 läßt sich zu einem Coil von 1000 mm Innen-Durchmesser wickeln und ist im Radius-Bereich ab 150 mm ohne Schwierigkeiten von Hand krümmbar.

In Fig. 5, 6 weist die Zwischenlage 52 von der Breite B = 35 mm einen 7 mm breiten inneren Rand 53 und einen 4 mm breiten äußeren Rand 54 auf, zwischen denen eine Längsprofilierung 55 verläuft. Der innere Rand 53 ist im Abstand A von 30 mm mit dreieckförmigen, 7 mm tiefen Einschnitten 57 versehen. Der äußere Rand 54 weist um den halben Abstand A versetzte Einschnitte 58 von der Breite C = 2 mm auf, welche 11 mm tief sind und somit in die Längsprofilierung 55 einschneiden. Die Längsprofilierung 55 besteht aus Kämmen 59 und Tälern 60, von denen die zum inneren Rand 53 gelegenen von den Einschnitten 58 des äußeren Randes 54 nicht berührt werden. D.h., es bleibt ein Bereich 56 frei von Einschnitten. Einschließlich der Höhe der Kämme 59 ergibt sich bei einer Blechdicke von 0,5 mm eine Gesamtdicke der Zwischenlage 52 von 1,5 mm . Mittig zwischen den Einschnitten 57 des inneren Randes 53 sind Löcher 61 angeordnet, welche dem Verbinden der Enden eines vom Coil 1 (Fig.1, 2) abgelängten, die Zwischenlage 52 bildenden Abschnittes dienen, beispielsweise mittels eines nicht dargestellten Bindegliedes, wie Drahtspange, Hakenspange, vorzugsweise von der Breite der Zwischenlage 52. Diese Zwischenlage 52 läßt sich zu einem Coil von 1000 mm Innen-Durchmesser wickeln. Der kleinste erzielbare Krümmungsradius beträgt etwa 400 mm.

In Fig. 7, 8 weist die Zwischenlage 72 von der Breite B = 24 mm einen 9 mm breiten inneren Rand 73 auf, welcher im Abstand A von 20 mm mit 8 mm tiefen Einschnitten 77 versehen ist. Ein äußerer Rand und äußere Einschnitte sind hier nicht vorhanden. Als Längsprofilierung 75 sind hier im gesamten einschnittsfreien Bereich 76 Wellenkämme 79 und Wellentäler 80 vorgesehen. Diese Zwischenlage 72 läßt sich zu einem Coil von 800 mm Innen-Durchmesser wickeln. Der kleinste erzielbare Krümmungsradius beträgt etwa 300 mm.

## Patentansprüche

1. Metallische Zwischenlage (2, 32, 52, 72) in Form von Halbzeug, für in der Dichtungsebene gekrümmte hochbeanspruchbare Flachdichtungen für die Apparate- und Rohrleitungstechnik, aus mindestens zwei Dichtwerkstoffschichten und dieser Zwischenlage (2, 32, 52, 72), *dadurch gekennzeichnet*, daß diese Zwischenlage (2, 32, 52, 72) aus einem quasi endlosen, ein Längsprofil (35, 55, 75) aufweisenden, als Liefereinheit zu einem schraubenlinienförmigen Coil (1) gewickelten Blechstreifen besteht, welcher mindestens einseitig einen mit Einschnitten (37, 57, 77; 38, 58) versehenen Rand (33, 53, 73; 34, 54) aufweist, wobei der Coil (1) einen definierten Durchmesser besitzt, welcher unter Berücksichtigung der Steifigkeit des Blechstreifens in Verbindung mit der gewählten Größe, Form und Abstand der Einschnitte (37, 57, 77; 38, 58), vor Ort eine Krümmung des Blechstreifens in der Dichtebene innerhalb eines dem jeweiligen Coil-Durchmesser zugeordneten Verformungsbereiches auf den benötigten Krümmungsradius erlaubt, daß vor Ort der benötigte Abschnitt abtrennbar, die Enden verbindbar, und vor dem Spannen der Dichtungsstelle zwischen entsprechenden Dichtwerkstoffzuschnitten plazierbar ist.

2. Verfahren zum Herstellen einer hochbeanspruchbaren Flachdichtung für die Apparate- und Rohrleitungstechnik aus zwei Dichtwerkstoffschichten und einer metallischen Zwischenlage (2, 32, 52, 72) vor Ort, *dadurch gekennzeichnet*, daß als Zwischenlage (2, 32, 52, 72) ein quasi endloser, eine Längsprofilierung (35, 55, 75) und ein mindestens einen mit Einschnitten (37, 57, 77; 38, 58) versehenen Rand (33, 53, 73; 34, 54) aufweisender Blechstreifen hergestellt und zu einem schraubenlinienförmigen Coil (1) definierten Durchmessers gewickelt wird, daß vor Ort der Blechstreifen in der Dichtungsebene auf einen gewünschten, innerhalb des durch das Zusammenwirken des definierten Coil-Durchmessers mit der Steifigkeit des Blechstreifens und der gewählten Größe, Form und Abstand der Einschnitte (37, 57, 77; 38, 58) vorgegebenen Verformungsbereiches liegenden Radius der Dichtung gekrümmt wird, daß er auf die erforderliche Länge abgetrennt wird, daß die Enden miteinander verbunden, und der so geschlossene Blechstreifen zwischen zugeschnittenen Dichtwerkstoffschichten plaziert und das Ganze zwischen den Dichtflächen der Dichtungsstelle eingespannt wird.
